Europäisches Patentamt

European Patent Office

Office européen des brevets

(19)

(11) Numéro de publication: **0 035 921**
**B1**

(12) **FASCICULE DE BREVET EUROPEEN**

(45) Date de publication du fascicule du brevet: **14.12.83**

(51) Int. Cl.³: **C 04 B 13/14, E 21 D 11/00**

(21) Numéro de dépôt: **81400213.5**

(22) Date de dépôt: **11.02.81**

(54) **Composition de mortier à prise rapide à l'anhydrite et procédé de soutènement de galeries de mines avec ce mortier.**

(30) Priorité: **12.02.80 FR 8003020**

(43) Date de publication de la demande:
**16.09.81 Bulletin 81/37**

(45) Mention de la délivrance du brevet:
**14.12.83 Bulletin 83/50**

(84) Etats contractants désignés:
**DE**

(56) Documents cités:
**BE - A - 385 815**
**DE - C - 873 069**
**FR - A - 1 259 589**
**FR - A - 2 329 607**
**FR - A - 2 377 359**
**GB - A - 1 397 421**

(73) Titulaire: **Kneip, Edouard**
**7, Résidence Bellevue**
**F-57134 Distroff (FR)**

(72) Inventeur: **Kneip, Edouard**
**7, Résidence Bellevue**
**F-57134 Distroff (FR)**

(74) Mandataire: **CABINET BONNET-THIRION**
**95 Boulevard Beaumarchais**
**F-75003 Paris (FR)**

Courier Press, Leamington Spa, England.

Composition de mortier à prise rapide à l'anhydrite et procédé de soutènement de
galeries de mines avec ce mortier

L'invention se rapporte à une composition de mortier à prise rapide pour projection à la lance avec ajout d'une quantité convenable d'eau, comportant de l'anhydrite et un catalyseur de prise pulvérulent contenant un mélange de sels de métaux alcalins et de transition. L'invention a également trait à un procédé d'application de cette composition au soutènement de galeries de mines en suivant l'avancement.

Dans les exploitations minières en galeries souterraines, il est nécessaire de construire des soutènements supportant dès leur mise en place les poussées des terrains environnants. Ces soutènements ont pour rôle d'éviter des éboulements qui feraient obstacle à la circulation du personnel et du matériel, et de rendre étanches les parois de galeries pour éviter les pertes d'aérages, le passage de l'air dans les vieux travaux avec risque d'incendie, la formation excessive de poussières inflammables, et l'irruption incontrôlée de gaz combustibles dans les galeries.

La solution classique consiste à projeter à la lance un mortier d'anhydrite, óu sulfate de calcium anhydre, sur les parois de galerie, en suivant l'avancement des travaux. L'anhydrite contenant de préférence une proportion notable de fines passant à la maille de 0,2 mm, est chargée dans la trémie d'un propulseur pneumatique avec addition d'un catalyseur de prise, typiquement un mélange de sulfate de potassium et sulfate de fer, tel par exemple que décrit dans la demande de brevet français No. 2.329607 déposée le 26 Octobre 1976, et acheminée pneumatiquement par des canalisations jusqu'à une lance de projection où l'anhydrite est mélangée à une quantité d'eau convenable pour former le mortier. La dissolution du catalyseur induit pratiquement instantanément le début d'hydratation du sulfate de calcium dont la prise s'achève rapidement au contact des parois.

On pourrait penser que, en raison du prix relativement élevé de l'anhydrite il serait intéressant de réaliser les soutènements de galeries de mines en béton projeté, comme cela est pratiqué dans la construction de tunnels routiers et ferroviaires. En fait l'utilisation du béton projeté est exclue dans la plupart des cas en travaux miniers étant donné que la composition du béton devrait être réalisée à l'intérieur des travaux, dans des espaces confinés où les appareillages nécessaires pourraient difficilement trouver place et où les poussières alcalines de ciment seraient nocives.

L'utilisation de mortiers composés d'anhydrite, et de catalyseur avec adjonction d'eau dans la lance impose des contraintes gênantes. L'anhydrite, au moment de l'emploi doit contenir une quantité minimale de gypse, résultant de l'hydratation spontanée du sulfate de calcium en présence de l'humidité de l'air. A l'extraction en carrière l'anhydrite ne doit pas contenir plus de 2 à 3% de gypse, et l'absorption d'humidité au cours des transports et stockages ne doit pas faire monter la teneur en gypse à plus de 8%, au-delà de laquelle la résistance du mortier décroît fâcheusement. Il est clair que l'utilisation de tonnages importants d'anhydrite impose la constitution de stocks d'importance correspondante avec une durée de stockage en rapport, de sorte que la teneur en gypse au moment de l'emploi croît en fonction du tonnage utilisé. Par ailleurs, l'atmosphère des mines est généralement saturée d'humidité, ce qui accroît les contraintes de stockage au fond, et par ailleurs provoque un début de prise de l'anhydrite humide, surtout en fines sous l'effet du catalyseur dès l'introduction de ce dernier, ce qui limite la longueur de canalisation acceptable entre le propulseur pneumatique et la lance pour éviter la formation prématurée excessive de gypse.

L'invention a pour objet une composition de mortier d'anhydrite pour projection à la lance, ce qui permet de réduire le tonnage d'anhydrite.

L'invention a également pour objet une composition de mortier d'anhydrite où la formation prématurée de gypse est très réduite.

L'invention a encore pour objet une composition de mortier d'anhydrite à résistance accrue après projection.

A ces effets, l'invention propose une composition de mortier à prise rapide, pour projection à la lance avec ajout d'une quantité convenable d'eau, comportant de l'anhydrite et un catalyseur de prise pulvérulent contenant un mélange de sels de métaux alcalin et de transition, caractérisée en ce qu'elle comporte une masse de prise constituée en poids de 25% à 80% d'anhydrite et de 75% à 20% de granulats neutres humides passant à la maille de 50 mm et refusés à la maille de 4 mm, la proportion pondérale de ces granulats refusés à la maille de 25 mm étant au plus de 45%, ledit catalyseur ajouté à raison de 1 à 1,6% du poids de la masse de prise, contenant outre les sels précités, entre 5 et 20% en poids de terre de diatomées.

L'adjonction de granulats calibrés à la masse de prise réduit évidemment d'autant la quantité d'anhydrite utilisée, tandis que ces granulats participent par eux-mêmes à la résistance du mortier après la prise. De plus, l'humidité superficielle des granulats favorise la formation d'un film d'anhydrite, provenant des fines, à la surface des granulats, dont le transport pneumatique est facilité, et dont la liaison avec la matrice de sulfate de calcium hydraté se forme à la projection. En outre, la constitution du catalyseur, dans lequel la terre de diatomées, adsorbante, vient se coller à la surface des grains des sels actifs pour les enrober vient coopérer avec la facilité de transport pneumatique, ainsi qu'avec la résistance du mortier après la prise. En effet, au cours du transport pneumatique, les grains des sels actifs sont isolés de l'anhydrite par la présence à leur surface de terre de diatomées, de sorte qu'il n'y a pas induction prématurée de l'hydratation de l'anhydrite. Par contre, l'adjonction de l'eau de prise dans la lance provoque une ségrégation immédiate des sels actifs et de la terre de diatomées, en raison de leurs densités différentes.

De préférence, les sels actifs du catalyseur sont des chlorures ou des sulfates d'un métal alcalin et d'un métal de transition notamment fer ou zinc, sous forme anhydre.

De préférence, l'anhydrite contient au moins 30% en poids de fines passant à la maille de 0,2 mm, et moins de 6% de gypse.

Sous un autre aspect, l'invention a pour objet un procédé de soutènement de galeries de mines en suivant l'avancement en application de la composition de mortier selon l'invention.

Les caractéristiques et avantages de l'invention ressortiront d'ailleurs de la description qui va suivre, assortie d'exemples.

Les propulseurs pneumatiques utilisés couramment dans les mines pour le soutènement des galeries en suivant l'avance des travaux comportent une trémie de chargement au fond de laquelle une roue à palette assure simultanément la distribution dosée de la charge à un caisson avec une buse de soufflage alimentée en air comprimé, et l'étanchéité du caisson vers la trémie. Le caisson est relié par une canalisation à une lance, alimentée en eau, où s'effectue le mélange de la charge et de l'eau de prise, en quantités respectives dosées. La canalisation entre propulseur et lance peut s'étendre sur quelques milliers de mètres, et est périodiquement prolongée pour suivre l'avancement du front de taille.

La trémie du propulseur est alimentée en anhydrite par l'intermédiaire d'un convoyeur à tapis sur lequel sont déchargés des wagonnets apportant l'anhydrite. Un distributeur couplé à la roue à palette assure un apport de catalyseur à la masse de prise en quantité proportionnelle à celle que la roue à palette introduit dans le caisson. Les turbulences apportées par la buse de soufflage et le transport dans la canalisation assurent la dispersion du catalyseur dans la masse de prise.

Suivant l'invention, l'appareillage dont la disposition vient d'être rappelée est utilisable pratiquement sans modification. On prépare un catalyseur par mélange intime de 20 parties en poids de terre de diatomées (tests siliceux d'infusoires), 15 parties de sulfate de potassium pulvérulent et 65 parties de sulfate de fer neige légèrement humides. On a préparé des granulats à partir des stériles d'extraction de mines, entassés en haldes à proximité des puits, par des criblages et dépoussiérage de façon que les granulats passent au crible de 50 mm de maille et soient refusés au crible de 4 mm de maille. Un fractionnement complémentaire au crible de 25 mm de maille assure une proportion de passants et refusés d'environ 60/40, qui sont humidifiés et mélangés grossièrement.

Les granulats sont chargés sur des wagonnets de desserte conjointement avec de l'anhydrite comportant au moins 30% de fines passant à la maille de 0,2 mm et contenant moins de 6% de gypse. Les wagonnets sont séparés en deux cavités, affectées respectivement à l'anhydrite et aux granulats, par une cloison intermédiaire, de sorte que les charges d'anhydrite et de granulats respectivement soient dans un rapport pondéral convenable, typiquement 30% et 70%. Le déchargement des wagonnets sur le transporteur à tapis de la trémie du propulseur assure un premier mélange de l'anhydrite et des granulats, mélange qui sera amélioré au déversement dans la trémie, puis au passage dans le caisson. On constate que les granulats sont enrobés par les fines d'anhydrite qui adhère en surface par l'effet de l'humidité.

Parallèlement le catalyseur, qui se présente à ce stade comme un mélange intime de fins cristaux de sulfate de fer et de sulfate de potassium, farinés en surface par des particules de terre de diatomées collées par l'humidité des grains, est déversé et dispersé dans la trémie à la dose typique de 1,3% en poids de la masse de prise constituée par le mélange d'anhydrite et de granulats introduit dans le caisson. Lors de l'acheminement de la composition de mortier dans les canalisations sous l'effet propulseur de l'air comprimé, l'enrobage des granulats par les fines d'anhydrite produit un effet lubrifiant et il ne se produit ni pertes de charge excessive, ni ségrégation des constituants de la composition. En outre les grains de sulfates catalyseurs ne viennent pas en réaction avec l'anhydrite, en raison de la présence du farinage de terre de diatomées; il ne se produit pas de mottage par formation de sulfate de calcium hydraté naissant.

Par contre, lorsque la composition arrive à la base de la lance et est mélangée à l'eau de prise, les grains de catalyseur sont lavés de la terre de diatomées, et se dissolvent pour induire la germination des cristaux de sulfate de calcium hydraté, dont la croissance assurera la prise du mélange projeté.

Les essais de mise au point de l'invention ont permis de dégager un certain nombre de règles gouvernant les proportions relatives des différents constituants. Des mesures ont montré que la proportion pondérale anhydrite/granulats entre 80/20 et 25/75 avait peu d'influence sur la résistance à la compression à 24 heures, voisine de 120 bars, à comparer avec les valeurs obtenues classiquement avec l'anhydrite seule qui se situent vers 70—90 bars. Par ailleurs la plasticité du mortier, notamment au cours du séchage qui suit la prise, croît quelque peu avec la teneur en anhydrite. On aura donc intérêt, pour le soutènement de terrains qui ont tendance à bouger, à augmenter la teneur en anhydrite pour éviter des fissures. D'autre part, la proportion de granulats refusés à la maille de 25 mm est un facteur croissant de rigidité du mortier, et de plus, au-delà de 45% en poids, certaines difficultés de transport dans les canalisations apparaissent. Dans l'ensemble la composition de la masse de prise apparaît très peu critique, ce qui autorise des dosages peu précis.

Pour le catalyseur, on a constaté, en confirmation de résultats classiques, que les sels pouvaient être pratiquement des sulfates ou des chlorures sans distinction; le sel de métal de transition peut être un sel de fer ou de zinc à résultats sensiblement équivalents, et le critère de choix est essentiellement le critère économique. On constate par ailleurs qu'il est préférable que les proportions de sel d'alcalin au sel de métal de transition soient comprises entre 1/2 et 1/8.

Le farinage des grains de sels catalyseurs par la terre de diatomées est efficace pour éviter le mottage de la masse de prise à partir de 5% en poids du catalyseur. Toutefois le transport pneumatique dégrade quelque peu la protection apportée par le farinage des grains par la terre de diatomées, de sorte qu'il convient d'augmenter la teneur en terre de diatomées lorsque les canalisations de transport s'allongent. Au-delà de 20% il n'y a plus d'augmentation d'efficacité appréciable, mais à cette teneur, on peut assurer le transport pneumatique à des distances de 40% à 50% supérieures aux distances maximales classiques.

Enfin la vitesse de prise croît avec la teneur en catalyseur. En dessous de 1% en poids la prise n'est pas convenablement induite. Au-delà de 1,6% on ne constate pas de gain de vitesse de prise. Entre ces limites, l'ajustement de la teneur en catalyseur sera effectué pour adapter la vitesse de prise en fonction de la plasticité des terrains et de la vitesse de déhouillage, c'est-à-dire du temps dont on dispose pour fixer le terrain. Dans ce domaine, l'homme du métier procédera aux ajustements utiles, appuyé sur son expérience des réactions du terrain et des mesures prises classiquement pour s'y adapter.

Il apparaît clairement de la description précédente que le mortier d'anhydrite a été mis au point dans une application précise qui est le soutènement des galeries de mines. Mais il est non moins clair que la portée de la présente invention ne saurait se limiter à cette application déterminée mais s'étend au contraire à toutes les applications de mortier où les propriétés de vitesse de prise, de résistance à la déformation et au feu, de plasticité résiduelle, et les avantages de réduction de prix de revient (par remplacement partiel de l'anhydrite par des granulats locaux) et de souplesse d'utilisation seront des facteurs de progrès technique, notamment dans les domaines du bâtiment et des travaux publics.

## Revendications

1. Composition de mortier à prise rapide, pour projection à la lance avec ajout d'une quantité convenable d'eau, comportant de l'anhydrite et un catalyseur de prise pulvérulent contenant un mélange de sels de métaux alcalin et de transition, caractérisée en ce qu'elle comporte une masse de prise constituée en poids de 25% à 80% d'anhydrite et de 75% à 20% de granulats neutres humides passant à la maille de 50 mm et refusés à la maille de 4 mm, la proportion pondérale de ces granulats refusés à la maille de 25 mm étant au plus de 45%, ledit catalyseur ajouté à raison de 1 à 1,6% du poids de la masse de prise, contenant outre les sels précités, entre 5 et 20% en poids de terre de diatomées.

2. Composition selon la revendication 1, caractérisée en ce que les sels contenus dans le catalyseur sont des chlorures ou sulfates anhydres.

3. Composition selon la revendication 1 ou la revendication 2, caractérisée en ce que les métaux de transition des sels contenus dans le catalyseur sont fer et zinc.

4. Composition selon une quelconque des revendications 1 à 3, caractérisée en ce que le rapport pondéral du sel d'alcalin au sel de métal de transition est compris entre 1/2 et 1/8.

5. Composition selon une quelconque des revendications 1 à 4, caractérisée en ce que l'anhydrite contient au moins 30% en poids de fines passant à la maille de 0,2 mm, et moins de 6% de gypse.

6. Procédé de soutènement de galeries de mines en suivant l'avancement, où l'on charge une masse de prise et un catalyseur dans la trémie d'un propulseur pneumatique, on achemine pneumatiquement la masse et le catalyseur par une canalisation jusqu'à une lance où un mortier est constitué par ajout d'eau en quantité convenable, et on projette le mortier sur les parois de galerie, caractérisé en ce que l'on compose la masse de prise dans la trémie du propulseur avec une composition selon une quelconque des revendications 1 à 5.

## Patentansprüche

1. Schnell härtende Mörtel-Zusammensetzung zum Anspritzen mit einem Düsenrohr unter Zufügung einer angemessenen Menge von Wasser, bestehend aus Anhydrit und einem feinpulvrigen Abbindekatalysator, der eine Mischung aus Alkalisalzen und aus Übergangsmetallsalzen enthält, gekennzeichnet durch eine Abbindemasse aus 25 bis 80 Gew.-% Anhydrit und aus 75 bis 20 Gew.-% feuchten neutralen Zuschlägen welche durch eine Maschenweite von 50 mm hindurchgehen und bei einer Maschenweite von 4 mm zurückgehalten werden, wobei das Gewichtsverhältnis der Zuschläge, die bei einer Maschenweite von 25 mm zurückgehalten werden, höchstens 45% beträgt, und wobei der im Verhältnis von 1 bis 1,6 Gew.-% der Abbindemasse zugegebene Katalysator neben den erwähnten Salzen zwischen 5 und 20 Gew.-% Diatomeenerde enthält.

2. Zusammensetzung nach Anspruch 1, dadurch gekennzeichnet, daß die in dem Katalysator enthaltenen Salze wasserfreie Chloride oder Sulfate sind.

3. Zusammensetzung nach Anspruch 1 oder 2, dadurch gekennzeichnet, daß die in dem Katalysator enthaltenen Übergangsmetalle der Salze Eisen oder Zink sind.

4. Zusammensetzung nach einem der Ansprüche 1 bis 3, dadurch gekennzeichnet, daß das Gewichtsverhältnis des Alkalisalzes zu dem Salz des Übergangsmetalls zwischen 1/2 und 1/8 liegt.

5. Zusammensetzung nach einem der Ansprüche 1 bis 4, dadurch gekennzeichnet, daß das Anhydrit wenigstens 30 Gew.-% Feinstoffe, welche durch die Maschenweite von 0,2 mm gehen, und wenigstens 6% Gips enthält.

6. Verfahren zum Unterstützen von Bergwerkstollen entlang der Vortriebsbewegung, wobei man eine Abbindemasse und einen Katalysator in den Vorratsbunker eines pneumatischen Fördermittels einbringt und die Masse und den Katalysator durch eine Leitung bis zu einem Düsenrohr pneumatisch fördert, wo durch Zugabe von Wasser in einer angemessenen Menge ein Mörtel gebildet wird und wo man den Mörtel auf die Wandung des Stollens wirft, dadurch gekennzeichnet, daß man die Abbindermasse in dem Vorratsbunker des Förderers mit einer Zusammensetzung nach einem der Ansprüche 1 bis 5 kombiniert.

**Claims**

1. A quick-setting mortar composition for projection by a gun with the addition of a suitable amount of water, comprising anhydrite and a powder setting catalyst containing a mixture of alkali and transition metal salts, characterised in that it comprises a setting mass formed by weight of 25% to 80% of anhydrite and 75% to 20% of moist neutral granulates which pass through a 50 mm mesh and which are retained at a 4 mm mesh, the proportion by weight of said granulates which are retained at the 25 mm mesh being at most 45%, said catalyst which is added in a proportion of from 1 to 1.6% by weight of the setting mass containing, besides said salts, between 5 and 20% by weight of diatomacous earth.

2. A composition according to claim 1 characterised in that the salts contained in the catalyst are anhydrous sulphates or chlorides.

3. A composition according to claim 1 or claim 2 characterised in that the transition metals of the salts contained in the catalyst are iron and zinc.

4. A composition according to any one of claims 1 to 3 characterised in that the weight ratio of the alkali metal salt to the transition metal salt is between 1/2 and 1/8.

5. A composition according to any one of claims 1 to 4 characterised in that the anhydrite contains at least 30% by weight of fines which pass a 0.2 mm mesh, and less than 6% of gypsum.

6. A process for supporting mine galleries as mining advances, wherein a setting mass and a catalyst are introduced into the hopper of a pneumatic propulsion device, the mass and the catalyst are pneumatically delivered by a conduit to a gun where a mortar is formed by adding a suitable amount of water, and the mortar is projected on to the gallery walls, characterised in that the setting mass is composed in the hopper of the propulsion device with a composition according to any one of claims 1 to 5.